# EUROPÄISCHE PATENTSCHRIFT

(11) **EP 1 395 024 B1**
(45) Veröffentlichungstag und Bekanntmachung des Hinweises auf die Patenterteilung: **15.04.2015**
(21) Anmeldenummer: 03102489.6
(22) Anmeldetag: 11.08.2003
(51) Int. Cl.: H04M 3/42

(54) **Verfahren zur Bereitstellung von CTI-Diensten und/oder -Leistungsmerkmalen über einen eine Mehrzahl von Kommunikationsverbindungen umfassenden Kommunikationskanal**
Method for providing CTI services and/or performance features over a communication link comprising multiple communication channels
Méthode fournissant des services et/ou des charactéristiques techniques d'intégration téléphonique par ordinateur sur une liaison de communication comprenant plusieurs canaux de communication

(30) Priorität: 02.09.2002 DE 10240466
(43) Veröffentlichungstag der Anmeldung: 03.03.2004
(73) Patentinhaber: Unify GmbH & Co. KG, 81379 München (DE)
(72) Erfinder: Volkmann, Michael, 58313 Herdecke (DE); Schaumburg, Stephan, 48731 Reken (DE); Rist, Claus, 44795 Bochum (DE)
(74) Vertreter: Fritzsche, Thomas

(56) Entgegenhaltungen:
- EP-A- 1 168 789
- ECMA: "Protocol for Computer Supported Telecommunications Applications (CSTA) Phase III" Juni 2000 (2000-06), STANDARD ECMA-285, 2ND EDITION, PAGE(S) A-D,I , XP002264069 * Seite 11 * * Seite 143 * * Seiten 163-172 *
- LUCENT TECHNOLOGIES: "Status Reporting Services" TELEPHONY SERVICES API , VERSION 2, [Online] Januar 1997 (1997-01), Seiten 6-1-6-11, XP002431298 Gefunden im Internet: URL:http://www.cs.cornell.edu/courses/cs51 9/1998fa/project/Doc/PBX/tsapi.pdf> [gefunden am 2007-04-24]
- HOCHSCHULE MITTWEIDA: "Vergleich von CSTA und ACL-C"[Online] August 1998 (1998-08), Seiten 1-45, XP002431299 Gefunden im Internet: URL:telecom.htwm.de/telecom/forschung/siem ens/STAT_98.AUG/CSTA/Vergleich_CSTA_ACL-C. doc> [gefunden am 2007-04-26]

## Beschreibung

Computer-Telefonie-Integration (CTI) ist ein Mehrwertdienst zur Effizienzerhöhung bei Sprachübertragungen. Mit CTI-Diensten können einfachste Anwendungen, wie computerunterstützte Rufnummernwahl, bis hin zu sämtlichen Call-Center-Funktionen als Dienstleistungen angeboten werden. Bei CTI handelt sich prinzipiell um eine Unterstützung von Telefondiensten durch Computertechnik. Dazu gehören neben einer Unterstützung von Leistungsmerkmalen mit ihren diversen Vermittlungsfunktionen auch Steuerung und Überwachung von Telekommunikationsanlagen und Gebührenerfassung.

Eine CTI-Plattform umfaßt üblicherweise fehlerresistente Server und unterstützt die ITU -Empfehlungen H.100 und H.110. Funktionelle Leistungsmerkmale umfassen gewöhnlich eine intelligente, netzwerkfähige Vermittlungssteuerung, ebenso wie eine Automatisierung von Steuerungs- und Überwachungsfunktionen innerhalb eines Call Centers, software- und datenbankgesteuerte Funktionen zur automatischen Anrufverteilung und Mechanismen zur Erfassung und Einblendung von gespeicherten und ausgewerteten Kontaktdaten.

Im Laufe der Jahre entstanden diverse von Hersteller entwickelte CTI-Plattformen, die von verschiedenen Standardisierungsgremien standardisiert wurden. Es gibt daher eine Vielzahl von Standards, die in einer gewissen Abhängigkeit zueinander stehen. CTI setzt einerseits auf bekannten Standards wie ISDN auf und definiert andererseits Hardwarestruktur-Standards und Schnittstellen-Standards. Einen solchen Schnittstellen-Standard stellt beispielsweise Computer Supported Telecommunications Application (CSTA) dar. CSTA legt Aufbau und Art von Nachrichten für verschiedene Dienstmerkmale fest, wie Makeln, Rufumleitung, Dreierkonferenz, siehe auch in:
ECMA: "Protocol for Computer Supported Telecommunications Applications (CSTA) Phase III", Juni 2000 (2000-06), STANDARD ECMA-285, 2ND EDITION, PAGE(S) A-D,I, XP002264069, Seite 11, Seite 143, Seiten 163-172;
LUCENT TECHNOLOGIES: "Status Reporting Services" TELEPHONY SERVICES API, VERSION 2, [Online] Januar 1997 (1997-01), Seiten 6-1-6-11, XP002431298, gefunden im Internet: URL:http://www.cs.cornell.edu/courses/cs519/1998fa/project/ Doc/PBX/tsapi.pdf>; und
HOCHSCHULE MITTWEIDA: "Vergleich von CSTA und ACL-C" [Online] August 1998 (1998-08), Seiten 1-45, XP002431299, gefunden im Internet: URL:telecom.htwm.de/telecom/forschung/siemens/ STAT_98.AUG/CSTA/Vergleich_CSTA_ACL-C.doc>.

EP 1 168 789 A2 offenbart eine direkte Verbindung der Koppelfelder eines CTI-Servers mit einer Telekommunikationsanlage.

Mit den bisherigen Verfahren zur Bereitstellung von CTI-Diensten und/oder -Leistungsmerkmalen ist lediglich eine anschlußbezogene (portbezogene) Bereitstellung von CTI-Diensten möglich, nicht aber eine verbindungsbezogene Bereitstellung. Dies bedeutet, daß an ISDN-Mehrgeräte-Anschlüssen, speziell ISDN-SO-Anschlüssen, Dienste bzw. Leistungsmerkmale über ISDN-B-ISanäle nur dann bereitgestellt werden können, wenn pro ISDN-B-Kanal eine Verbindung (Call) besteht.

Der vorliegenden Erfindung liegt daher die Aufgabe zugrunde, ein Verfahren zur Bereitstellung von CTI-Diensten und/oder -Leistungsmerkmalen über einen eine Mehrzahl von Kommunikationsverbindungen umfassenden Kommunikationskanal anzugeben.

Erfindungsgemäß wird diese Aufgabe durch ein Verfahren mit den in Anspruch 1 angegebenen Merkmalen gelöst. Vorteilhafte Weiterbildungen des erfindungsgemäßen Verfahrens sind den abhängigen Ansprüchen zu entnehmen.

Ein wesentlicher Aspekt der vorliegenden Erfindung besteht darin, daß bei einer Anforderung eines CTI-Dienstes bzw. -Leistungsmerkmals für eine ausgewählte Kommunikationsverbindung eine Zuordnung zwischen einem Anschlußidentifikator, einer Verbindungskennung und dem angeforderten Dienst bzw. Leistungsmerkmal hergestellt wird. Dies schafft eine Voraussetzung dafür, daß bei einem nachfolgenden Aufruf einer Steuerungssequenz ein die Zuordnung bezeichnender Zuordnungsidentifikator als Übergabeparameter verwendet wird, statt wie bisher der Anschlußidentifikator. Da der Zuordnungsidentifikator einen Verweis auf die Verbindungskennung impliziert, kann der angeforderte Dienst bzw. das Leistungsmerkmal durch Abarbeitung der Steuerungssequenz speziell für die ausgewählte Kommunikationsverbindung bereitgestellt werden.

Die vorliegende Erfindung wird nachfolgend an einem Ausführungsbeispiel anhand der Zeichnung näher erläutert. Es zeigt
- Figur 1: eine schematische Darstellung einer Telekommunikationsanlage mit einem CTI-Server,
- Figur 2: ein Ablaufdiagramm für ein Verfahren zur Bereitstellung von CTI-Diensten und/oder -Leistungsmerkmalen über einen eine Mehrzahl von Kommunikationsverbindungen umfassenden Kommunikationskanal.

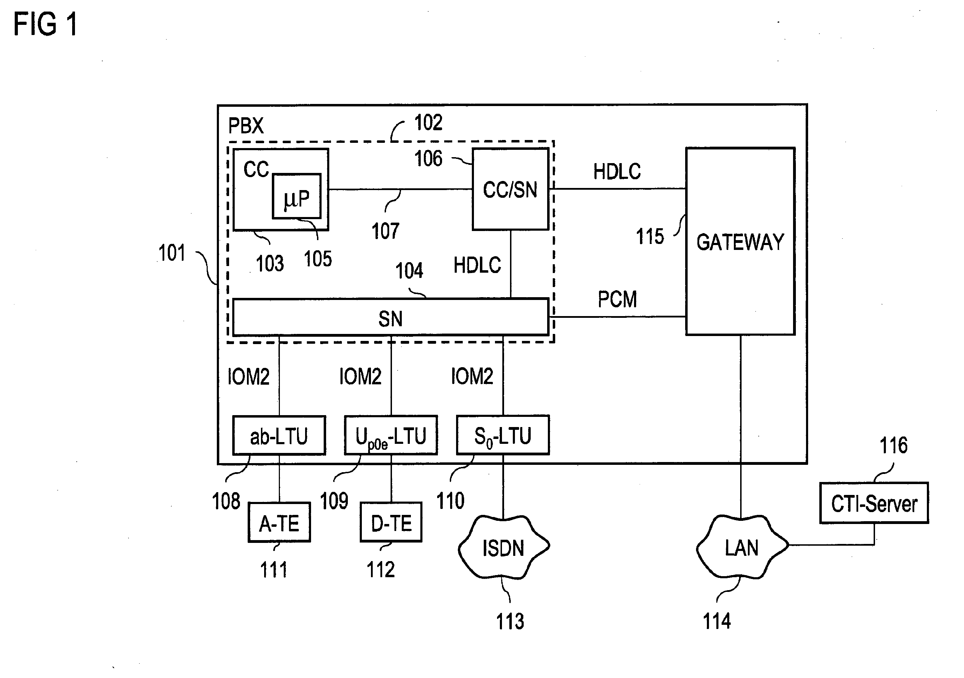

In Figur 1 ist der Aufbau einer Telekommunikationsanlage 101 (private branch exchange - PBX) schematisch dargestellt, die beispielweise in WO 01/89231 beschrieben ist. Die Telekommunikationsanlage 101 weist eine üblicherweise auf einer zentralen Baugruppe angeordnete Zentraleinheit 102 mit einer vermittlungstechnischen Steuerungseinrichtung 103 (common control -CC) und einem Koppelnetz 104 (switching network - SN) auf. Die vermittlungstechnische Steuerungseinrichtung 103 umfaßt zur Steuerung von Funktionen der Telekommunikationsanlage 101 eine einen Mikroprozessor 105. Durch das Koppelnetz 104 werden über die Telekommunikationsanlage 101 zu verbindende Sprach- bzw. Datenübertragungskanäle durchgeschaltet. Die vermittlungstechnische Steuerungseinrichtung 103 und das Koppelnetz 104 sind über eine Umwandlungseinheit 106 miteinander verbunden. Durch die Umwandlungseinheit 106 werden ein für einen Mikroprozessorbus 107 zwischen der vermittlungstechnischen Steuerungseinrichtung 103 und der Umwandlungseinheit 106 verwendetes Übertragungsprotokoll und ein vom Koppelnetz 104 unterstütztes HDLC-Protokoll (high level data link control) bidirektional in einander umgewandelt.

An das Koppelnetz 104 sind über Verbindungsleitungen Anschlußeinheiten 108, 109, 110 angeschlossen, die üblicherweise jeweils auf einer dezentralen Baugruppe angeordnet sind. Beispielsweise ist eine analoge Anschlußeinheit 108 mit einer ab-Schnittstelle zum Anschluß von analogen Kommunikationsend geräten 111, eine digitale Anschlußeinheit 109 mit einer Up0e-Schnittstelle zum Anschluß von digitalen Kommunikationsendgeräten 112 und eine weitere digitale Anschlußeinheit 110 mit einer S0-Schnittstelle zum Anschluß eines ISDN-Kommunikationsnetzes 113 an die Telekommunikationsanlage 101 vorgesehen. Sprach- bzw. Dateninformationen werden entsprechend dem IOM2-Übertragungsprotokoll (ISDN oriented modular extended) zwischen den Anschlußeinheiten 108, 109, 110 und dem Koppelnetz 104 übertragen. Einzelheiten zum IOM2-Übertragungsprotokoll sind der Produktschrift "ICs for Communications - IOM2 Interface Reference Guide", Siemens AG, München 3/91, Bestell-Nr. B115-H6397-X-X-7600, Seite 6 bis 12 zu entnehmen. Anstelle des IOM2-Übertragungsprotokoll kann zur bidirektionalen Datenübertragung zwischen dem Koppelnetz 104 und den Anschlußeinheiten 108, 109, 110 auch das PCM-Übertragungsprotokoll (puls code modulation) verwendet werden.

Für eine Verbindung der Telekommunikationsanlage 101 mit einem Datennetz, beispielsweise einem lokalen Rechnernetz 114 (local area network - LAN), weist die Telekommunikationsanlage 101 eine separate Datennetzkopplungseinheit 115 auf. Die Datennetzkopplungseinheit 115 weist eine Mehrzahl von in Figur 1 nicht explizit dargestellten gleichen Kontaktvorrichtungen zum Anschluß von Controllereinheiten auf. Derartige Controllereinheiten verfügen über eine HDLC- und eine PCM-Schnittstelle zur Zentraleinheit 102 und über eine standardisierte MII-Schnittstelle (medium independent interface) zu einer LAN-Anschlußeinheit der Telekommunikationsanlage 101. Eine Verbindung zwischen dem lokalen Rechnernetz 114 und der LAN-Anschlußeinheit kann beispielsweise mittels einer 10Base-T- oder einer 100Base-T-Schnittstelle realisiert werden.

Eine Controllereinheit der Datennetzkopplungseinheit 115 dient üblicherweise einer protokollgemäßen Vorverarbeitung von Steuerdaten, die über das lokale Rechnernetz 114 empfangen wurden, und deren Weiterleitung an die Zentraleinheit 102. Die Zentraleinheit 102 steuert dann die Ausführung der durch die Steuerdaten identifizierten Funktionen. Dies schließt auch von der Datennetzkopplungseinheit 115 auszuführende Funktionen ein. Die Funktionen, wie Kopplung von unterschiedlichen Rechnernetzen, externer Zugriff auf Netzressourcen im Rahmen von "Teleworking", CTI-Anwendungen oder "Voice over IP"-Anwendungen werden durch der Datennetzkopplungseinheit 115 zugeordnete funktionsspezifische digitale Signalprozessoren ausgeführt, die durch die zentrale Steuerungseinheit 103 angesteuert werden.

An das lokale Rechnernetz 114 können beispielsweise für spezielle Aufgaben vorgesehene Server angeschlossen werden, die für die Telekommunikationsanlage 101 auf gängigen Personal Computern nicht aber in der vermittlungstechnischen Steuerungseinheit 103 lauffähige Programme verfügbar machen, die damit nicht auf die Telekommunikationsanlage 101 portiert werden müssen. Zudem wird die vermittlungstechnische Steuerungseinheit 103 durch eine Auslagerung einer entsprechenden Programmablaufsteuerung entlastet, so daß Prozeßrechen-Ressourcen der zentralen Steuerungseinheit 103 primär für vermittlungstechnische Steuerungsaufgaben reserviert werden können.

Ein für spezielle Aufgaben vorgesehener Server stellt ein an das lokale Rechnernetz 114 angeschlossener CTI-Server 116 dar, der für in Figur 1 nicht explizit dargestellte, einer Anschlußeinheit 111, 112, 113 zugeordnete CTI-Clients CTI-Anwendungen bereitstellt. Alternativ zur der in Figur 1 dargestellten Anbindung des CTI-Servers 116 an die Telekommunikationsanlage 101 ist auch eine Implementierung des CTI-Servers durch eine in die Telekommunikationsanlage 101 integrierte Server-Baugruppe möglich.

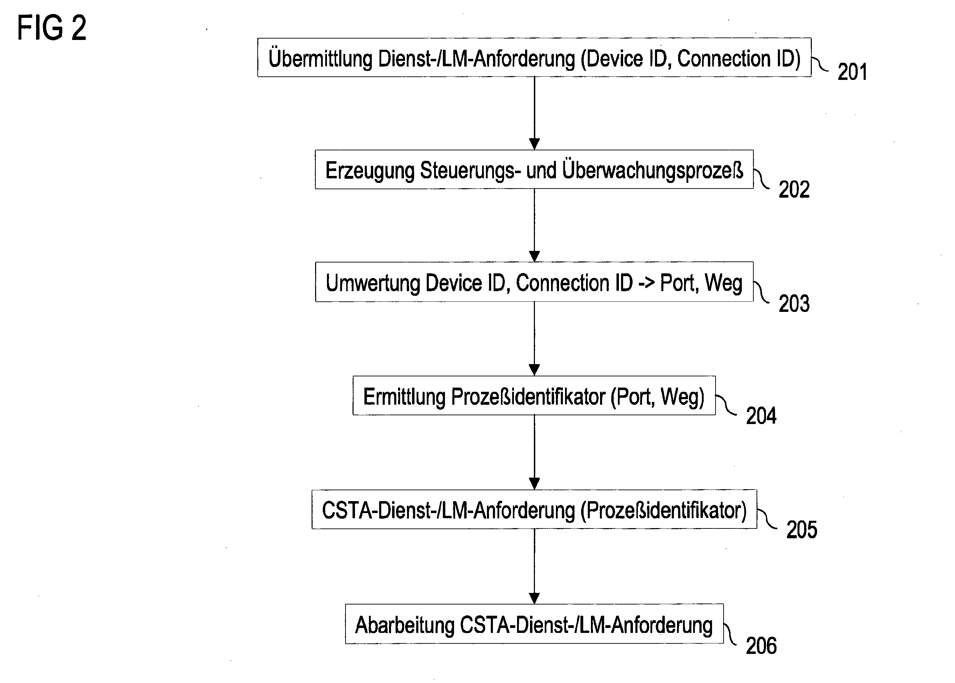

Ausgangspunkt des in Figur 2 dargestellten Ablaufdiagramms ist eine Übermittlung einer Dienst- bzw. Leistungsmerkmalsanforderung von einem CTI-Client an den CTI-Server 116 (Schritt 201). Bei der Dienst- bzw. Leistungsmerkmalsanforderung wer den ein Anschlußidentifikator (Device ID) und eine Verbindungskennung (Connection ID) als Parameter übergeben. Die Verbindungskennung bezeichnet dabei eine ausgewählte Kommunikationsverbindung, für die der angeforderte Dienst bzw. das Leistungsmerkmal bereitzustellen ist. Anschließend wird ein Steuerungs- und Überwachungsprozeß zur Veränderung eines vermittlungstechnischen Zustandes der ausgewählten Kommunikationsverbindung in Abhängigkeit von definierten Ereignissen erzeugt (Schritt 202).

Mit der Erzeugung des Steuerungs- und Überwachungsprozesses werden der Anschlußidentifikator, die Verbindungskennung und ein den erzeugten Steuerungs- und Überwachungsprozeß bezeichnender Prozeßidentifikator in einer durch die vermittlungstechnische Steuerungseinheit 103 verwalteten Prozeßliste gespeichert. Des weiteren wird der vermittlungstechnische Zustand der ausgewählten Kommunikationsverbindung durch den in der vermittlungstechnischen Steuerungseinrichtung 103 ablaufenden Steuerungs- und Überwachungsprozeß derart verändert, daß der Zustand der ausgewählten Kommunikationsverbindung den angeforderten Dienst bzw. das angeforderte Leistungsmerkmal widerspiegelt. Durch diese Verfahrensschritte wird eine Zuordnung zwischen dem Anschlußidentifikator, der Verwendungskennung und dem angeforderten Dienst bzw. Leistungsmerkmal hergestellt. Die hergestellte Zuordnung ist dabei durch den Prozeßidentifikator eindeutig bezeichnet.

Nach der Erzeugung des Steuerungs- und Überwachungsprozesses werden der Anschlußidentifikator (Device ID) und die Verbindungskennung (Connection ID) in Port- (Anschluß) und Wegangaben zur Verwendung durch die vermittlungstechnische Steuerungseinrichtung 103 umgewertet (Schritt 203). Anschließend wird der dem CTI-Server bislang noch nicht bekannte Prozeßidentifikator anhand der Port- und Wegangaben sowie der durch die vermittlungstechnische Steuereinrichtung 103 verwalteten Prozeßliste ermittelt (Schritt 204).

Nach Ermittlung des Prozeßidentifikators wird durch den CTI-Server eine von der vermittlungstechnischen Steuerungseinrichtung 103 abzuarbeitende Steuerungssequenz zur Einstellung des angeforderten Dienstes bzw. Leistungsmerkmals unter Angabe des Prozeßidentifikators als Übergabeparameter aufgerufen (Schritt 205) und durch die vermittlungstechnische Steuerungseinrichtung 103 unter Auswertung des Prozeßidentifikators abgearbeitet (Schritt 206). Die Abarbeitung der Steuerungssequenz durch die vermittlungstechnische Steuerungseinrichtung 103 bewirkt, daß ein vermittlungstechnischer Zustand eines durch den Übergabeparameter bezeichneten Kommunikationssystemobjekts geändert wird. Zu Kommunikationssystemobjekten zählen beispielsweise ohne Beschränkung der Allgemeinheit dieses Begriffs Anschlüsse, Leitungen, Kanäle oder Verbindungen.

Des weiteren werden durch die vermittlungstechnische Steuerungseinrichtung 103 verbindungsbezogene Daten mit Angaben über den Zustand der ausgewählten Kommunikationsverbindung und mit einem Verweis auf den der ausgewählten Kommunikationsverbindung zugeordneten Steuerungs- und Überwachungsprozeß gespeichert. Eine Abarbeitung der Steuerungssequenz unter Angabe des Prozeßidentifikators als Übergabeparameter bewirkt aufgrund der Verknüpfung zwischen dem Prozeßidentifikator und den verbindungsbezogenen Daten eine Änderung des vermittlungstechnischen Zustandes der ausgewählten Kommunikationsverbindung. Der angeforderte Dienst bzw. das Leistungsmerkmal wird daher infolge der Abarbeitung der Steuerungssequenz für die ausgewählte Kommunikationsverbindung bereitgestellt.

Vorzugsweise wird der angeforderte Dienst bzw. das Leistungsmerkmal über eine dem CSTA-Standard entsprechende Schnittstelle bereitgestellt. Durch das erfindungsgemäße Verfahren können bestehende CSTA-Anwendungen zur Bereitstellung von Diensten bzw. Leistungsmerkmalen über Kommunikationskanäle genutzt werden, die eine Mehrzahl von Kommunikationsverbindungen umfassen. Des weiteren wird der angeforderte Dienst bzw. das Leistungsmerkmal zur Nutzung an einem über eine ISDN-S0-Schnittstelle mit der Telekommunikationsanlage 101 verbundenen Kommunikationsendgerät bereitgestellt. Dabei ist durch das erfindungsgemäße Verfahren die Problematik der Bereitstellung von Diensten oder Leistungsmerkmalen an ISDN-Mehrgeräteanschlüssen gelöst.

Eine Anwendung des erfindungsgemäßen Verfahrens ergibt sich beispielsweise bei dem Leistungsmerkmal "Single Step Call Transfer With Reuse Of B-Channel". Mit dem erfindungsgemäßen Verfahren kann nämlich bei einer zwischen einem A-Teilnehmer und einem B-Teilnehmer bestehenden Kommunikationsverbindung eine zusätzliche Verbindung für eine Rückfrage zu einem C-Teilnehmer neu aufgebaut werden, wobei für diese zusätzliche Verbindung derselbe ISDN-B-Kanal verwendet wird wie für die Verbindung zwischen dem A- und dem B-Teilnehmer.

Die Anwendung der vorliegenden Erfindung ist nicht auf das hier beschriebene Ausführungsbeispiel beschränkt.

## Patentansprüche

1. Verfahren zur Bereitstellung von CTI-Diensten und/oder -Leistungsmerkmalen über einen eine Mehrzahl von Kommunikationsverbindungen (104) umfassenden Kommunikationskanal, **dadurch gekennzeichnet, dass**
a) bei dem Verfahren eine Übermittlung (201) einer Dienst- bzw. einer Leistungsmerkmalsanforderung von einem CTI-Client (111, 112, 113) an einen CTI-Server (116) ein Anschlussidentifikator (Device ID) und eine Verbindungskennung (Connection ID) als Parameter übergeben werden,
b) nach einer Übermittlung (201) einer Anforderung eines CTI-Dienstes und/oder -Leistungsmerkmals für eine ausgewählte Kommunikationsverbindung eine Zuordnung zwischen einem Anschlußidentifikator (Device ID), einer Verbindungskennung (Connection ID) und dem angeforderten CTI-Dienst und/oder -Leistungsmerkmal hergestellt wird (201), wobei ein die Zuordnung bezeichnender Zuordnungsidentifikator als Übergabeparameter verwendet wird,
c) eine Steuerungssequenz zur Einstellung des angeforderten CTI-Dienstes und/oder -Leistungsmerkmals unter Angabe eines die Zuordnung zwischen dem Anschlußidentifikator (Device ID), der Verbindungskennung (Connection ID) und dem angeforderten CTI-Dienst und/oder -Leistungsmerkmal bezeichnenden Zuordnungsidentifikators als übergebenem Parameter aufgerufen wird (202),
d) zur Herstellung der Zuordnung zwischen dem Anschlußidentifikator (Device ID), der Verbindungskennung (Connection ID) und dem angeforderten CTI-Dienst und/oder -Leistungsmerkmal ein Steuerungs- und/oder Überwachungsprozeß zur Veränderung eines vermittlungstechnischen Zustandes der ausgewählten Kommunikationsverbindung in Abhängigkeit von definierten Ereignissen erzeugt wird (202) und der Anschlußidentifikator, die Verbindungskennung und ein den erzeugten Steuerungs- und/oder Überwachungsprozeß bezeichnender Prozeßidentifikator (204) in einer Prozeßliste gespeichert werden, wobei der Zustand der ausgewählten Kommunikationsverbindung derart verändert wird, daß er den angeforderten CTI-Dienst und/oder das angeforderte CTI-Leistungsmerkmal widerspiegelt,
e) nach der Erzeugung des Steuerungs- und Überwachungsprozesses der Anschlußidentifikator (Device ID) und die Verbindungskennung (Connection ID) in Port-(Anschluß) und Wegangaben zur Verwendung durch eine vermittlungstechnische Steuerungseinrichtung (103) umgewertet (203) werden,
f) nach anschließender Ermittlung des dem CTI-Server (116) bislang noch nicht bekannten Prozeßidentifikators anhand der Port- und Wegangaben, sowie der durch die vermittlungstechnische Steuerungseinrichtung (103) verwalteten Prozeßliste (204), und
g) die aufgerufene Steuerungssequenz zur Bereitstellung des angeforderten CTI-Dienstes und/oder -Leistungsmerkmals unter Auswertung des Zuordnungsidentifikators abgearbeitet wird (206).

2. Verfahren nach Anspruch 1,
bei dem durch eine vermittlungstechnische Steuerungseinrichtung eine Speicherung verbindungsbezogener Daten mit Angaben über den Zustand der ausgewählten Kommunikationsverbindung und mit einem Verweis auf den der ausgewählten Kommunikationsverbindung zugeordneten Steuerungs- und/oder Überwachungsprozeß veranlaßt wird.

3. Verfahren nach Anspruch 1 oder 2,
bei dem bei Abarbeitung der Steuerungssequenz (206) ein vermittlungstechnischer Zustand eines durch einen bei Aufruf der Steuerungssequenz übergebenen Parameter bezeichneten Kommunikationssystemobjekts geändert wird.

4. Verfahren nach einem der Ansprüche 1 bis 3,
bei dem der angeforderte CTI-Dienst und/oder das angeforderte CTI-Leistungsmerkmal über eine dem CSTA-Standard entsprechende Schnittstelle (114) bereitgestellt werden (205).

5. Verfahren nach einem der Ansprüche 1 bis 4,
bei dem der angeforderte CTI-Dienst und/oder das angeforderte CTI-Leistungsmerkmal zur Nutzung an einem über eine ISDN-SO-Schnittstelle (110) mit einer Kommunikationsanlage (113) verbundenen Endgerät bereitgestellt werden.

## Claims

1. Method for providing CTI services and/or performance features over a communication channel comprising multiple communication links (104), **characterized in that**
a) in the method, a transmission (201) of a service or performance feature request, a device identifier (Device ID) and a connection identifier (Connection ID) are transferred as parameter from a CTI client (111, 112, 113) to a CTI server (116),
b) after a transmission (201) of a request for a CTI service and/or performance feature for a selected communication connection, an association between a device identifier (Device ID), a connection identifier (Connection ID) and the requested CTI service and/or performance feature is established (201), wherein an association identifier designating the association is used as transferred parameter,
c) a control sequence for adjusting the requested CTI service and/or performance feature with indication of an association identifier, which designates the association between the device identifier (Device ID), the connection identifier (Connection ID) and the requested CTI service and/or performance feature, is called up (202) as transferred parameter,
d) for establishing the association between the device identifier (Device ID), the connection identifier (Connection ID) and the requested CTI service and/or performance feature, a control and/or monitoring process is generated for changing a switching state of the selected communication connection as a function of defined results (202), and the device identifier, the connection identifier and a process identifier (204) designating the generated control and/or monitoring process are stored in a process list, wherein the state of the selected communication connection is changed in such a manner that it reflects the requested CTI service and/or the requested CTI performance feature,
e) after the generation of the control and monitoring process, the device identifier (Device ID) and the connection identifier (Connection ID) are revalued (203) into port (device) and path indications for use by a switching control device (103),
f) after subsequent determination of the process identifier, which so far is not known to the CTI server (116), on the basis of the port and path indications, as well as of the process list (204) managed by the switching control device (103), and
g) the called up control sequence for providing the requested CTI service and/or performance feature is processed with evaluation of the association identifier (206).

2. Method according to Claim 1,
wherein, by means of a switching control device, a storage of the communication-related data, with indication as to the state of the selected communication connection, and with a reference to the control and/or monitoring process associated with the selected communication connection, is initiated.

3. Method according to Claim 1 or 2,
wherein, at the time of the processing of the control sequence (206), a switching state of a communication system object designated by a parameter transferred at the time of the call up of the control sequence is changed.

4. Method according to any one of Claims 1 to 3,
wherein the requested CTI service and/or the requested CTI performance feature is/are provided (205) via an interface (114) corresponding to the CSTA standard.

5. Method according to any one of Claims 1 to 4,
wherein the requested CTI service and/or the requested CTI performance feature are provided for use on a terminal device that is connected via an ISDN-S0 interface (110) to a communication system (113).

## Revendications

1. Méthode pour fournir des services et/ou des caractéristiques techniques d'intégration téléphonique par ordinateur (CTI) sur une liaison de communication comprenant plusieurs canaux de communication (104), **caractérisée en ce que**
a) dans la méthode, une transmission (201) d'un service ou d'une demande de caractéristique technique CTI, un identifiant d'appareil (ID d'appareil) et un identifiant de connexion (ID de connexion) sont transférés en tant que paramètres à partir d'un client CTI (111, 112, 113) à un serveur CTI (116),
b) après une transmission (201) d'une demande pour un service et/ou une caractéristique technique CTI, pour une connexion de communication sélectionnée, une association entre un identifiant d'appareil (ID d'appareil), un identifiant de connexion (ID de connexion) et le service et/ou la caractéristique technique CTI demandé est établie (201), dans laquelle un identifiant d'association désignant l'association est utilisé comme paramètre transféré,
c) une séquence de commande pour ajuster le service et/ou la caractéristique technique d'intégration téléphonique demandé avec indication d'un identifiant d'association, qui désigne l'association entre l'identifiant de l'appareil (ID d'appareil), l'identifiant de connexion (ID de connexion) et le service et/ou la caractéristique technique CTI demandé, est appelé (202) comme paramètre transféré,
d) pour établir l'association entre l'identifiant de l'appareil (ID d'appareil), l'identifiant de connexion (ID de connexion) et le service et/ou la caractéristique technique CTI demandé, un procédé de commande et/ou de surveillance est généré pour changer un état de commutation de la connexion de communication sélectionnée en fonction de résultats définis (202), et l'identifiant de l'appareil, l'identifiant de connexion et un identifiant de procédé (204) désignant la commande générée et/ou un procédé de surveillance sont stockés dans une liste de procédés, dans laquelle l'état de la connexion de communication sélectionnée est modifié de telle manière qu'il reflète le service CTI demandé et/ou la caractéristique technique CTI requise,
e) après la génération du procédé de commande et de surveillance, l'identifiant de l'appareil (ID d'appareil) et l'identifiant de connexion (ID de connexion) sont réévalués (203) pour fournir un port (appareil) et des indications de chemin pour l'utilisation par un dispositif de commande de commutation (103),
f) après la détermination ultérieure de l'identifiant de procédé, qui, jusqu'ici, n'est pas connu du serveur CTI (116), sur la base du port et des indications de chemin, ainsi que de la liste des procédés (204) gérée par le dispositif de commande de commutation (103), et
g) la séquence de commande appelée pour fournir le service et/ou la caractéristique technique CTI demandé est traitée avec une évaluation de l'identifiant d'association (206).

2. Méthode selon la revendication 1,
dans laquelle, au moyen d'un dispositif de commande de commutation, un stockage des données relatives à la communication, avec indication de l'état de la connexion de la communication sélectionnée, et avec une référence au procédé de commande et/ou de surveillance associé à la connexion de communication sélectionnée, est initié.

3. Méthode selon la revendication 1 ou 2,
dans laquelle, au moment du traitement de la séquence de commande (206), un état de commutation d'un objet du système de communication désigné par un paramètre transmis au moment de l'appel de la séquence de commande est modifié.

4. Méthode selon l'une ou l'autre des revendications 1 à 3,
dans laquelle le service CTI demandé et/ou la caractéristique technique CTI requise est/sont fourni(s) (205) via une interface (114) correspondant à la norme CSTA.

5. Méthode selon l'une ou l'autre des revendications 1 à 4,
dans laquelle le service CTI demandé et/ou la caractéristique technique CTI requise est/sont fourni(s) pour une utilisation sur un dispositif de terminal qui est connecté via une interface RNIS-S0 (110) pour un système de communication (113).
